(19) 

Europäisches Patentamt
European Patent Office
Office européen des brevets

(11) **EP 3 751 466 A1**

(12) **EUROPÄISCHE PATENTANMELDUNG**

(43) Veröffentlichungstag:
**16.12.2020 Patentblatt 2020/51**

(51) Int Cl.:
**G06N 3/02** (2006.01)  **G06Q 10/04** (2012.01)
**G06Q 50/26** (2012.01)

(21) Anmeldenummer: **19180027.5**

(22) Anmeldetag: **13.06.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
- **Zimmermann, Hans-Georg**
  **82319 Starnberg/Percha (DE)**
- **Gschnitzer, Samuel Fred**
  **80799 München (DE)**
- **Tietz, Christoph**
  **85521 Ottobrunn (DE)**
- **Tokic, Michel**
  **88069 Tettnang (DE)**

(54) **VERFAHREN ZUR VORHERSAGE EINES SCHADSTOFFWERTES IN DER LUFT**

(57) Die Erfindung betrifft ein computerimplementiertes Verfahren zur Vorhersage von wenigstens einem Schadstoffwert in der Luft für einen festgelegten zukünftigen Zeitraum, wobei ein neuronales Netz wenigstens ein gemessenes Wetterdatum für einen festgelegten vergangenen Zeitraum, wenigstens einen gemessenen Schadstoffwert der Luft für den vergangenen Zeitraum und wenigstens ein für den zukünftigen Zeitraum vorhergesagtes Wetterdatum verwendet, um für den zukünftigen Zeitraum wenigstens einen Schadstoffwert in der Luft vorherzusagen.

FIG 1

EP 3 751 466 A1

**Beschreibung**

Die Erfindung betrifft ein Verfahren zur Vorhersage von wenigstens einem Schadstoffwert in der Luft, ein Verfahren zum Trainieren eines neuronalen Netzes und eine Steuereinheit, die ausgebildet ist, Steuerbefehle für die Steuerung eines Straßenverkehrs auszugeben.

Im Stand der Technik ist es bekannt, gegenwärtige Schadstoffwerte für die Luftverschmutzung zu erfassen und bei Überschreiten einer Grenze der Luftverschmutzung den Straßenverkehr zu begrenzen.

Die Aufgabe der Erfindung besteht darin, ein verbessertes Verfahren zur Bereitstellung einer Vorhersage einer Luftverschmutzung bereitzustellen. Zudem besteht die Aufgabe der Erfindung darin, ein verbessertes Verfahren zum Trainieren eines neuronalen Netzes zur Vorhersage einer Luftverschmutzung bereitzustellen. Weiterhin besteht die Aufgabe der Erfindung darin, eine verbesserte Steuereinheit zur Steuerung des Straßenverkehrs bereitzustellen, um insbesondere eine Überschreitung von Grenzwerten für Schadstoffwerte der Luft zu vermeiden.

Die Aufgaben der Erfindung werden durch die unabhängigen Patentansprüche gelöst.

Es wird ein computerimplementiertes Verfahren zur Vorhersage von wenigstens einem Schadstoffwert in der Luft vorgeschlagen. Dazu wird ein neuronales Netz verwendet, das wenigstens ein gemessenes Wetterdatum für einen festgelegten vergangenen Zeitraum berücksichtigt, wenigstens einen gemessenen Schadstoffwert der Luft für den vergangenen Zeitraum berücksichtigt und wenigstens ein vorhergesagtes Wetterdatum für einen zukünftigen Zeitraum berücksichtigt, um für den zukünftigen Zeitraum wenigstens einen Schadstoffwert in der Luft vorherzusagen.

Abhängig von der gewählten Ausführungsform sind die gemessenen Wetterdaten für einen festgelegten Ortsbereich bestimmt worden. Zudem sind abhängig von der gewählten Ausführungsform die gemessenen Schadstoffwerte für den festgelegten Ortsbereich gemessen worden. Weiterhin sind vorzugsweise die vorhergesagten Wetterdaten für den bestimmten Ortsbereich vorhergesagt worden. Ein festgelegter Ortsbereich kann z.B. ein beliebig festgelegter Teilbereich einer Stadt, insbesondere ein Stadtviertel oder auch nur eine Straße oder ein Straßenabschnitt sein. Zudem kann ein festgelegter Ortsbereich auch eine größere Fläche, insbesondere eine Stadt oder einen Landkreis umfassen.

Mithilfe des neuronalen Netzes ist es möglich, anhand der in der Vergangenheit gemessenen Wetterdaten und anhand der in der Vergangenheit gemessenen Schadstoffwerte für die Zukunft eine Vorhersage für die Entwicklung des Schadstoffwertes zu treffen. Diese Vorhersage wird insbesondere dadurch verbessert, dass für den zukünftigen Zeitraum vorhergesagte Wetterdaten berücksichtigt werden.

Versuche haben gezeigt, dass sich insbesondere folgende Wetterdaten für eine gute Vorhersage des Schadstoffwertes der Luft eignen: Luftdruck, Temperatur, Windgeschwindigkeit, Luftfeuchtigkeit, Windrichtung und Niederschlag. Diese Wetterdaten haben einen messbaren Einfluss auf eine Schadstoffkonzentration in der Luft und sind deshalb besonders aussagekräftig, um die Entwicklung eines Schadstoffwertes der Luft vorherzusagen. In einer einfachen Ausführungsform wird wenigstens eines der Wetterdaten verwendet, um den Schadstoffwert vorherzusagen. Je mehr verschiedene Wetterdaten verwendet werden, umso genauer ist die Vorhersage des Schadstoffwertes. Zudem ist die Vorhersage der zukünftigen Schadstoffwerte umso genauer, je länger der vergangene Zeitraum ist, für den die Wetterdaten berücksichtigt werden. Zur Reduzierung der Datenmenge können für festgelegte Zeiträume gemittelte Werte von Wetterdaten verwendet werden.

In einer weiteren Ausführungsform wird als vorhergesagtes Wetterdatum, das für den zukünftigen Zeitraum verwendet wird, wenigstens eines der folgenden Wetterdaten verwendet: Luftdruck, Temperatur, Windgeschwindigkeit, Luftfeuchtigkeit, Windrichtung und Niederschlag. Diese Wetterdaten sind auch für den zukünftigen Zeitraum als vorhergesagte Wetterdaten gut geeignet, um die Entwicklung des Schadstoffwertes in der Luft für die Zukunft mithilfe des neuronalen Netzes vorherzusagen. Die für die Zukunft vorhergesagten Wetterdaten können beispielsweise vom Server eines Wettervorhersagedienstes bereitgestellt oder mithilfe eines weiteren neuronalen Netzes von einem Computer oder Server berechnet werden.

Weiterhin haben Versuche gezeigt, dass die Berücksichtigung der Uhrzeit und/oder der Wochentage, zu denen die Wetterdaten und/oder die Schadstoffwerte gemessen werden, eine Verbesserung für die Vorhersage der Schadstoffwerte für die Zukunft ermöglichen. Insbesondere die Schadstoffwerte können eine hohe Abhängigkeit von der Uhrzeit und vom Wochentag aufweisen, da die Schadstoffwerte von Fahrzeugen des Straßenverkehrs, von Fabriken oder von der Landwirtschaft erzeugt werden. Im Straßenverkehr, in den Fabriken und in der Landwirtschaft werden abhängig vom Wochentag und/oder von der Tageszeit unterschiedliche Mengen und unterschiedliche Arten von Schadstoffen erzeugt.

Weiterhin hat sich gezeigt, dass auch die Wetterdaten eine Korrelation zu Tageszeiten und somit zu den Uhrzeiten aufweisen. Durch die Berücksichtigung der Uhrzeiten und/oder der Wochentage, zu denen die Wetterdaten und/oder die Schadstoffwerte gemessen werden, kann eine weitere Verbesserung einer präzisen Vorhersage der Luftschadstoffe für die Zukunft erreicht werden.

Das beschriebene Verfahren eignet sich insbesondere dazu, um eine Stickoxidkonzentration, eine Schwefeldioxidkonzentration, eine Ammoniakkonzentration, flüchtige organische Verbindungen ohne Methan, eine Kohlenmonoxidkonzentration, Kohlendioxidkonzentration und/oder eine Feinstaubkonzentration für die Zukunft als Schadstoffwerte vorherzusagen. Bei der Feinstaubkonzentration kann beispielsweise ein PM10 Wert oder ein PM2,5 Wert gut vorhergesagt werden. Die Schadstoffwerte sind nicht abschließend, sondern es können weitere Schadstoffwerte mithilfe des beschriebenen Verfahrens vorhergesagt werden.

Beispielsweise können die Wetterdaten und/oder die Schadstoffwerte entweder jede Stunde gemessen oder über eine Stunde gemittelt werden und als Wert für eine Stunde erfasst und vom neuronalen Netz berücksichtigt werden. Es kann mithilfe des beschriebenen Verfahrens eine Schätzung und eine Vorhersage der Schadstoffwerte der Luft über einen zukünftigen Zeitraum von bis zu fünf Tagen oder länger ermittelt werden. Dabei kann die Vorhersage der Schadstoffwerte für die nächsten fünf Tage z.B. für jede Stunde erfolgen. Versuche haben gezeigt, dass es vorteilhaft ist, wenn der vergangene Zeitraum, in dem die gemessenen Wetterdaten und die gemessenen Schadstoffwerte erfasst und vom neuronalen Netz berücksichtigt wurden, wenigstens zweimal so lang ist, wie der zukünftige Zeitraum, für den die zukünftigen Schadstoffwerte ermittelt werden.

Weiterhin hat sich gezeigt, dass sich ein geschlossenes, historisch konsistentes neuronales Netz besonders eignet, um das beschriebene Verfahren durchzuführen.

Eine weitere Verbesserung der Vorhersage der Schadstoffwerte für die Zukunft kann dadurch erreicht werden, dass vom neuronalen Netz für die Vorhersage des Schadstoffwertes eine Abweichung zwischen den gemessenen Wetterdaten und den vom neuronalen Netz für die jeweiligen Zeitpunkte des vergangenen Zeitraums vorhergesagten, d.h. prädizierten Wetterdaten berücksichtigt wird. Die Abweichung kann z.B. als Differenz zwischen dem gemessenen Wetterdatum und dem vorhergesagten Wetterdatum berücksichtigt werden. Mit Hilfe dieser Maßnahme kann eine interne Anpassung des neuronalen Netzes bei jedem Zeitpunkt, zu dem eine Ermittlung des Wetterdatums für den vergangenen Zeitraum erfolgt, durchgeführt werden.

Zudem kann für eine Verbesserung der Vorhersage des Schadstoffwertes vom neuronalen Netz eine Abweichung zwischen den vorhergesagten Wetterdaten und vom neuronalen Netz vorhergesagten Wetterdaten während des zukünftigen Zeitraumes berücksichtigt werden. Die Abweichung kann z.B. als Differenz zwischen dem vorhergesagten Wetterdatum und dem neuronalen Netz vorhergesagten Wetterdatum berücksichtigt werden. Auf diese Weise wird eine verbesserte Vorhersage der Schadstoffwerte erreicht. Mit Hilfe dieser Maßnahme kann eine interne Anpassung des neuronalen Netzes bei jedem Zeitpunkt, zu dem eine Ermittlung des Schadstoffwertes für den vergangenen Zeitraum erfolgt, durchgeführt werden.

Eine weitere Verbesserung des Verfahrens wird dadurch erreicht, dass vom neuronalen Netz bei der Vorhersage des Schadstoffwertes für den zukünftigen Zeitraum eine Abweichung zwischen den gemessenen Schadstoffwerten und den von neuronalen Netz vorhergesagten Schadstoffwerten während des vergangenen Zeitraums berücksichtigt wird. Die Abweichung kann z.B. als Differenz zwischen dem gemessenen Schadstoffwert und dem vorhergesagten Schadstoffwert berücksichtigt werden. Auch mit dieser Maßnahme wird eine präzisere Vorhersage der Schadstoffwerte für den zukünftigen Zeitraum ermöglicht. Mit Hilfe dieser Maßnahme kann eine interne Anpassung des neuronalen Netzes bei jedem Zeitpunkt, zu dem eine Ermittlung des zukünftigen Schadstoffwertes erfolgt, durchgeführt werden.

Eine weitere Verbesserung der Vorhersage der Schadstoffwerte wird dadurch erreicht, dass vom neuronalen Netz die Abweichung zwischen den Wetterdaten, die vom neuronalen Netz ermittelt werden, und den gemessenen Wetterdaten und die Abweichung zwischen den vom neuronalen Netz ermittelten Schadstoffwerten und den gemessenen Schadstoffwerten berücksichtigt werden, um einen Schadstoffwert und/oder ein Wetterdatum für einen zukünftigen Zeitpunkt vorherzusagen. Somit können zu jedem Zeitpunkt, zu dem das neuronale Netz eine Berechnung für den zukünftigen Schadstoffwert durchführt, die Abweichungen für die Wetterdaten und für die Schadstoffwerte berücksichtigt werden.

Eine Erweiterung des Verfahrens wird dadurch erreicht, dass der wenigstens eine Schadstoffwert und das wenigstens eine Wetterdatum mit weiteren Nicht-Observablen in einem Zustandsvektor vom neuronalen Netz verarbeitet werden. Nicht-Observable sind versteckte Variablen, die nicht beobachtet werden können. Somit kann die gesamte Modellierung im neuronalen Netz erfolgen. Es müssen keine sekundären Abbildungen zum Beispiel zur Codierung des Wettereinflusses erlernt werden. Dadurch verringert sich die Trainingszeit des neuronalen Netzes.

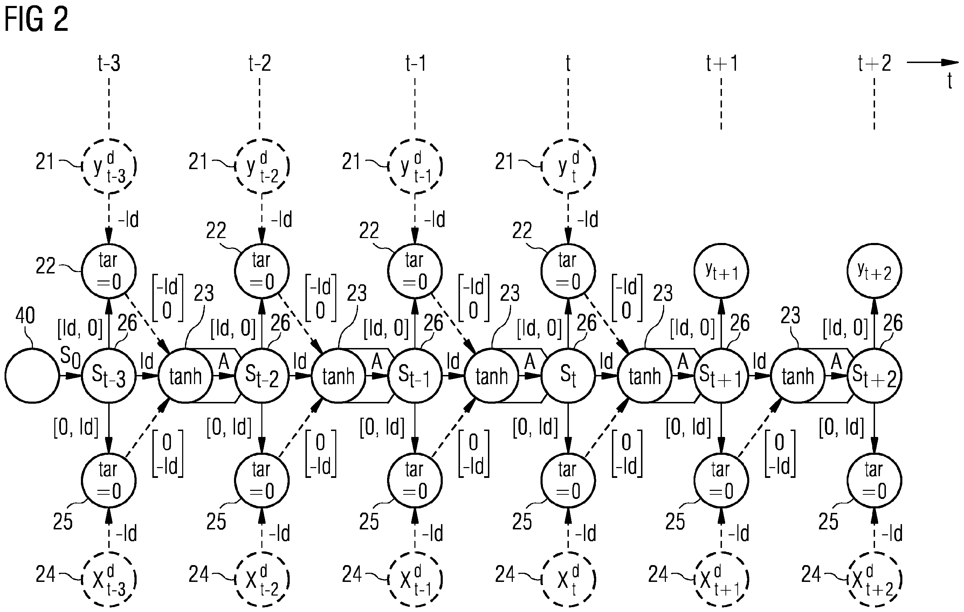

Insbesondere der Aufbau des historischen konsistenten neuronalen Netzwerkes (Closed Historically Consistent Neural Network), wie in den Figuren 2 bis 5 dargestellt, erlaubt es, das Netzwerk auf einfache Weise zu erweitern. Die Grundarchitektur des Netzwerkes kann also modular erweitert werden, ohne dass das gesamte Modellierungsproblem neu formuliert werden muss. Eine einfache Anpassung kann durch eine Erweiterung von Eingabedaten einer Verfügbarkeitsmaske erreicht werden.

Eine Modellierung der Schadstoffwerte und/oder der Wetterdaten erlaubt es, unzuverlässige Sensordaten zu verarbeiten. Dabei können nicht nur fehlende Sensordaten teilweise kompensiert, sondern auch systematische Fehler zum Beispiel in den gemessenen und extern prognostizierten Wetterdaten korrigiert werden. Diese Eigenschaft kann zum Beispiel genutzt werden, um lokale Abweichungen von einer großräumigen Wettervorhersage zu modellieren. Insgesamt wird somit der Prognoseprozess stabilisiert und die Prognosequalität verbessert.

Mithilfe des beschriebenen Verfahrens können genauere und stabilere Modelle zur Prognose von Schadstoffemissionen erlernt werden. Die Prognosemodelle können auch in Umgebungen mit unzuverlässiger Sensorik oder Problemen bei der Datenübertragung genutzt werden.

In einer weiteren Ausführungsform verwendet das neuronale Netz bei einem Ausfall von zu messenden Wetterdaten und/oder bei einem Ausfall von zu messenden Schadstoffwerten und/oder bei einem Ausfall von vorherzusagenden Wetterdaten anstelle der ausgefallenen Wetterdaten und/oder Schadstoffwerten und/oder vorhergesagten Wetterdaten vorhergesagte Wetterdaten und/oder vorhergesagte Schadstoffwerte, die vom neuronalen Netz in einem vorhergehenden Berechnungsschritt selbst vorhergesagt wurden. Somit können fehlende Sensordaten beispielsweise aufgrund eines Ausfalls eines Sensors oder aufgrund einer fehlerhaften Datenübertragung zwischen den Sensoren, die die Wetterdaten und Schadstoffwerte erfassen, und dem Computer, der das Verfahren durchführt, ausgeglichen werden.

Auf diese Weise ist es möglich, selbst bei einem zeitlich längeren Ausfall von gemessenen Wetterdaten und/oder von gemessenen Schadstoffwerten und/oder von zukünftigen vorhergesagten Wetterdaten eine gute Vorhersage für die zukünftige Entwicklung der Schadstoffwerte zu erreichen.

In einer weiteren Ausführungsform wird eine Verbesserung des Verfahrens dadurch erreicht, dass wenigstens ein Teil des Zustandsvektors wenigstens teilweise nicht nur bei einem folgenden Berechnungsschritt, sondern auch bei wenigstens einem übernächsten Berechnungsschritt oder weiteren in der Zukunft liegenden Berechnungsschritten wenigstens teilweise berücksichtigt wird. Im einfachsten Fall kann der gesamte Zustandsvektor wenigstens teilweise bei dem folgenden Berechnungsschritt berücksichtigt werden. In einer Ausführung werden neuronalen Netz die Observablen und die Nicht-Observablen des Zustandsvektors wenigstens teilweise bei einem folgenden Berechnungsschritt berücksichtigt. Die Art und Weise der Berücksichtigung des Zustandsvektors bei folgenden Berechnungsschritten kann in einer einfachen Ausführung mithilfe einer Matrixmultiplikation mit einer trainierten Diagonalmatrix D erreicht werden.

Versuche haben gezeigt, dass es vorteilhaft ist, wenn sich der Anteil des Zustandsvektors mit der Anzahl der in der Zukunft liegenden Berechnungsschritte reduziert. Somit wird eine Art Gedächtnisfunktion in Form einer LSTM-Speicherfunktion realisiert. Die Speicherfunktion kann beispielsweise durch die Verwendung einer Diagonalmatrix im neuronalen Netz dargestellt werden.

In einer weiteren Ausführungsform wird abhängig von dem vom neuronalen Netz vorhergesagten Schadstoffwert für die Zukunft ein Steuersignal zur Beeinflussung eines Verkehrsflusses erzeugt und ausgegeben, um eine zukünftige Erhöhung des Schadstoffwertes insbesondere in dem festgelegten Ortsbereich wenigstens zu verlangsamen. Durch die Vorhersage des zukünftigen Schadstoffwertes kann bereits vor dem tatsächlichen Erreichen des zukünftigen Schadstoffwertes eine Beeinflussung des Verkehrsflusses durchgeführt werden. Somit kann effizienter auf eine drohende Überschreitung des Grenzwertes für wenigstens einen Schadstoffwert reagiert werden. Insbesondere bei der Vorhersage von Schadstoffwerten über einen zukünftigen Zeitraum von einem oder mehreren Tagen kann rechtzeitig eine Beeinflussung des Verkehrsflusses durchgeführt werden, damit vorgegebene Grenzwerte der Schadstoffwerte nicht überschritten werden.

Zur Beeinflussung des Verkehrsflusses können beispielsweise Signalanlagen, insbesondere Ampelanlagen, in der Weise gesteuert werden, dass der Verkehrsfluss in einem festgelegten Ortsbereich reduziert wird. Zudem können beispielsweise bestimmte Verkehrsteilnehmer wie Dieselfahrzeuge oder LKW um einen Ortsbereich herum gelenkt werden. Weiterhin können Fahrverbote für bestimmte Fahrzeuggruppen wie zum Beispiel Dieselfahrzeuge oder Lkws rechtzeitig ausgesprochen werden. Aufgrund des langen zukünftigen Zeitraums, über den die Schadstoffwerte vorhergesagt werden können, der beispielsweise bis zu fünf Tage betragen kann, können sich Verkehrsteilnehmer rechtzeitig auf Fahrverbote oder Sperrungen von Ortsbereichen einstellen.

Es wird ein Verfahren zum Trainieren eines neuronalen Netzes zur Vorhersage wenigstens eines Schadstoffwertes in der Luft für einen festgelegten Ortsbereich für einen zukünftigen Zeitraum vorgeschlagen. Das neuronale Netz wird mit gemessenen Wetterdaten für den Ortsbereich für einen festgelegten vergangenen Zeitraum und mit gemessenen Schadstoffwerten der Luft für den festgelegten Ortsbereich für den vergangenen Zeitraum und mit für einen zukünftigen Zeitbereich vorhergesagten Wetterdaten für den festgelegten Ortsbereich trainiert. Beim Training des neuronalen Netzes werden die für den zukünftigen Zeitraum vorhergesagten Schadstoffwerte mit den dann tatsächlich in der Zukunft gemessenen Schadstoffwerten verglichen. Aus dem Vergleich wird mithilfe eines Backpropagation-Verfahrens eine Anpassung der Variablen des neuronalen Netzes, das heißt insbesondere eine Anpassung der Elemente einer Matrix **A** und vorzugsweise der Elemente einer Diagonalmatrix **D** durchgeführt. Die Anpassung wird in der Weise durchgeführt, dass das neuronale Netz die in der Zukunft gemessenen Schadstoffwerte präziser prognostiziert. Es wird ein neuronales Netz bereitgestellt, das in Hardware und/oder Software realisiert ist und die mit Verweis auf das Verfahren beschriebenen Eigenschaften und Strukturen aufweist.

Es werden insbesondere als gemessene Wetterdaten für den vergangenen Zeitraum wenigstens eines der folgenden Wetterdaten verwendet: Luftdruck, Temperatur, Windgeschwindigkeit, Luftfeuchtigkeit, Windrichtung und Niederschlag, und/oder wobei als vorhergesagte Wetterdaten für den zukünftigen Zeitraum wenigstens eines der folgenden Wetterdaten verwendet wird: Luftdruck, Temperatur, Windgeschwindigkeit, Luftfeuchtigkeit, Windrichtung und Niederschlag.

In einer weiteren Ausführungsform des vorgeschlagenen Verfahrens zum Trainieren des neuronalen Netzes werden beim Training für die Vorhersage des Schadstoffwertes für den zukünftigen Zeitraum eine Abweichung zwischen erlernten Wetterdaten und gemessenen Wetterdaten während des vergangenen Zeitraumes berücksichtigt.

In einer weiteren Ausführungsform des vorgeschlagenen Verfahrens zum Trainieren des neuronalen Netzes werden beim Training für die Vorhersage des Schadstoffwertes für den zukünftigen Zeitraum eine Abweichung zwischen erlernten Wetterdaten und vorhergesagten Wetterdaten während des zukünftigen Zeitraumes berücksichtigt.

Es wird ein Computer vorgeschlagen, der ausgebildet ist, um die beschriebenen Verfahren auszuführen.

Weiterhin wird ein Computerprogrammprodukt vorgeschlagen, das Befehle umfasst, die bei der Ausführung des Programmes durch einen Computer diesen veranlassen, eines der beschriebenen Verfahren auszuführen.

Weiterhin wird eine Steuereinheit vorgeschlagen, die ausgebildet ist, um Steuerbefehle für die Steuerung eines Straßenverkehrs auszugeben, wobei die Steuereinheit ein neuronales Netz aufweist. Das neuronale Netz ist ausgebildet, um wenigstens einen Schadstoffwert in der Luft für einen festgelegten Ortsbereich und für einen festgelegten zukünftigen Zeitraum vorherzusagen. Zudem weist das neuronale Netz einen Dateneingang für wenigstens ein gemessenes Wetterdatum, für wenigstens einen gemessenen Schadstoffwert der Luft und für wenigstens ein zukünftiges vorhergesagtes Wetterdatum auf.

Weiterhin weist das neuronale Netz Datenausgänge für wenigstens ein für einen zukünftigen Zeitraum zu ermittelnden Schadstoffwert und für wenigstens ein für den zukünftigen Zeitraum zu ermittelndes Wetterdatum auf. Die Steuereinheit ist ausgebildet, um abhängig vom ermittelten Schadstoffwert einen Steuerbefehl für die Steuerung des Straßenverkehrs zu ermitteln und auszugeben. Dadurch soll eine weitere Erhöhung des Schadstoffwertes, insbesondere eine Überschreitung eines vorgegebenen Grenzwertes verhindert werden. Zudem soll eine weitere Erhöhung des Schadstoffwertes wenigstens verlangsamt werden.

Die Steuereinheit ist ausgebildet, um den Steuerbefehl an Signalanlagen eines Straßenverkehrssystems oder direkt an Fahrzeuge des Straßenverkehrs zu übermitteln. Zudem kann die Steuereinheit ausgebildet sein, um direkt die Signalanlagen des Straßenverkehrssystems und/oder die Fahrzeuge des Straßenverkehrs zu steuern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

FIG 1 eine schematische Darstellung eines Ausschnittes eines Stadtbereiches mit einem Straßennetz und einer Infrastruktur zum Steuern des Verkehrs auf den Straßen,

FIG 2 in einer schematischen Darstellung eine erste Ausführungsform eines neuronalen Netzes,

FIG 3 in einer schematischen Darstellung eine zweite Ausführungsform eines neuronalen Netzes,

FIG 4 in einer schematischen Darstellung eine dritte Ausführungsform eines neuronalen Netzes,

FIG 5 eine schematische Darstellung der Speicherfunktion der dritten Ausführungsform des neuronalen Netzes und

FIG 6 einen schematischen Programmablauf zur Durchführung des beschriebenen Verfahrens darstellt.

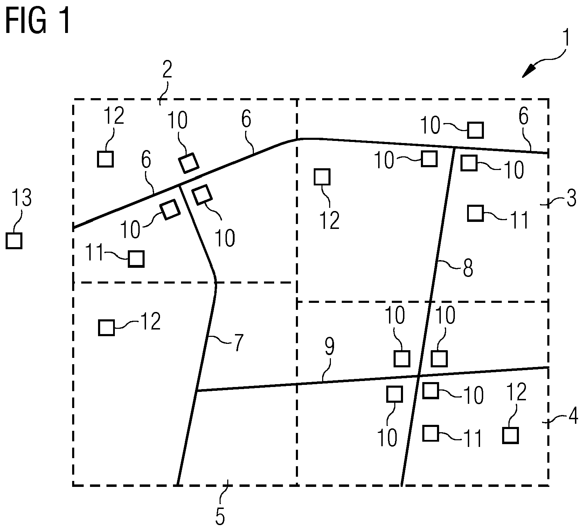

FIG 1 zeigt in einer schematischen Darstellung einen Ausschnitt eines Stadtbereiches 1, der in festgelegte Ortsbereiche 2, 3, 4, 5 unterteilt ist. Die Ortsbereiche sind schematisch in Form von Quadraten dargestellt, können jedoch auch andere Formen aufweisen. Durch den dargestellten Stadtbereich verlaufen Straßen 6, 7, 8, 9, die sich kreuzen oder ineinander münden. An den Kreuzungen und Einmündungen sind Signalanlagen 10 angeordnet, die beispielsweise in Form von Ampelanlagen ausgebildet sind. Die Signalanlagen 10 sind ausgebildet, um den Verkehrsfluss der Fahrzeuge an den Kreuzungen und Einmündungen nach vorgegebenen Parametern zu steuern. Weiterhin sind an Kreuzungen oder Einmündungen Computer 11 vorgesehen, die die Signalanlagen 10 steuern.

Es sind Sensoren 12 in den Ortsbereichen angeordnet, mit denen Wetterdaten und/oder Schadstoffwerte erfasst werden können. Als Wetterdaten können beispielsweise der Luftdruck, die Temperatur, die Windgeschwindigkeit, die Luftfeuchtigkeit, die Windrichtung und/oder ein Niederschlag erfasst werden. Zudem können mithilfe der Sensoren 12 Schadstoffwerte wie beispielsweise eine Stickoxidkonzentration, eine Schwefeldioxidkonzentration, eine Ammoniakkonzentration, flüchtige organische Verbindungen ohne Methan, eine Kohlenmonoxidkonzentration, eine Kohlendioxidkonzentration und/oder eine Feinstaubkonzentration erfasst werden. Als Feinstaubkonzentration kann beispielsweise eine PM10-Konzentration oder eine PM2,5-Konzentration erfasst werden.

Für die Bestimmung der PM10-Konzentration werden Partikel erfasst, die den Größen selektierenden Lufteinlass eines Messgerätes passieren, der für einen aerodynamischen Durchmesser von bis zu 10 Mikrometer für PM10 beziehungsweise von bis zu 2,5 Mikrometer für PM2,5 eine Abscheidewirksamkeit von 50 % aufweist. Abhängig von der gewählten Ausführungsform können auch andere Schadstoffwerte mithilfe der Sensoren erfasst werden.

Weiterhin ist ein zentraler Computer 13 vorgesehen. Der zentrale Computer 13 kann die Messwerte der Sensoren 12 beispielsweise drahtlos oder drahtgebunden empfangen. Ebenso können die Computer 11 ausgebildet sein, um die Messwerte der Sensoren 12 drahtlos oder drahtgebunden zu empfangen. In analoger Weise sind die Sensoren 12 ausgebildet, um die Messwerte drahtlos oder drahtgebunden an die Computer 11 oder den zentralen Computer 13 zu übermitteln. Abhängig von der gewählten Ausführungsform können die gemessenen Wetterdaten und/oder die gemessenen Schadstoffwerte auch von weiteren Datenquellen wie zum Beispiel einem weiteren Computer oder Server dem zentralen Computer 13 und/oder den Computern 11 zur Verfügung gestellt werden. Bei den zur Verfügung gestellten Wetterdaten ist zusätzlich die Information enthalten, für welchen Ortsbereich oder für welche Ortsbereiche die Wetterdaten gelten. In analoger Weise wird auch bei den zur Verfügung gestellten Schadstoffwerten die Information übermittelt, für welchen Ortsbereich die Schadstoffwerte gelten.

Somit übermitteln die Sensoren 12 nicht nur die Wetterdaten und/oder die Schadstoffwerte, sondern auch die eigene Ortsposition beziehungsweise den Ortsbereich, in dem sich die Sensoren befinden. Auf diese Weise können die von den Sensoren übermittelten Wetterdaten und/oder Schadstoffwerte einem festgelegten Ortsbereich zugeordnet werden.

Jeder Computer 11 und/oder der zentrale Computer 13 können ein neuronales Netz aufweisen, das in Hardware und/oder in Software realisiert ist. Dabei können die neuronalen Netze einem der neuronalen Netze entsprechen, die mithilfe der folgenden Figuren 2 bis 5 erläutert werden.

FIG 2 zeigt in einer schematischen Darstellung eine Struktur eines geschlossenen, historisch konsistenten neuronalen Netzes, wobei die Funktionsweise des Netzes für zeitlich aufeinander folgende Berechnungsschritte dargestellt ist. Es ist schematisch ein Zeitstrahl für die Zeit t dargestellt, wobei die Zeit t nach rechts in die Zukunft führt. Es sind jeweils Zeitpunkte t-3, t-2, t-1, t, t+1, t+2 für Berechnungsschritte des neuronalen Netzes dargestellt. Der zeitliche Verlauf startet in dem dargestellten Ausführungsbeispiel mit dem Zeitpunkt t-3 und geht über die Zeitpunkte t-2, t-1, zum gegenwärtigen Zeitpunkt t.

Zudem ermittelt das neuronale Netz auch für zukünftige Zeitpunkte $t + 1$ und $t + 2$ sowohl einen Zustandsvektor $s_{t+1}$ als auch wenigstens einen Schadstoffwert $y_{t+1}$, insbesondere einen Schadstoffwertvektor $y_{t+1}$. Die gewählte Darstellung ist in Bezug auf die Anzahl der Berechnungszeitpunkte $t$ nur schematisch dargestellt, da die Zeitpunkte, zu denen Berechnungen durchgeführt werden, sich bei realen Fällen von einem Zeitpunkt von $t - 288$ bis zu einem Zeitpunkt von $t + 144$ erstrecken können.

Das neuronale Netz verwendet einen Zustandsvektor $s_t$, der neben Nicht-Observablen, d.h. versteckten Variablen eine festgelegte Anzahl von Observablen, d.h. messbaren Größen aufweist. Bei einem Startpunkt 40 des Verfahrens werden die Werte der Observablen und der Nicht-Observablen des Zustandsvektors mit Startwerten belegt. Die Startwerte können z.B. zufällig ermittelte Werte zwischen -1 und 1 sein. In dem dargestellten Beispiel wird auf diese Weise zum Zeitpunkt $t - 3$ der Zustandsvektor $s_0$ erhalten, der die Startwerte für die Observablen und die Nicht-Observablen aufweist und als Zustandsvektor $s_{t-3}$ bezeichnet ist und in einer Speichereinheit 26 gespeichert wird. Der Index t-3 gibt den Zeitpunkt für den Berechnungsschritt an.

Zudem werden zum Zeitpunkt t-3 über einen ersten Dateneingang 21 wenigstens ein Schadstoffwert, insbesondere mehrere Schadstoffwerte verschiedener Schadstoffe in Form eines Schadstoffvektors $y_{t-3}^d$ mit mehreren Schadstoffwerten eingelesen. Die Schadstoffwerte der verschiedenen Schadstoffe, die über den ersten Dateneingang 21 zugeführt werden, stellen von Sensoren gemessene Schadstoffwerte dar. Die gemessenen Schadstoffwerte werden mit einem negativen Vorzeichen einer ersten Verarbeitungseinheit 22 zugeführt. Zudem wird eine oberste erste festgelegte Anzahl n von Observablen des Zustandsvektors $s_{t-3}$ ebenfalls der ersten Verarbeitungseinheit 22 zugeführt. Die erste festgelegte Anzahl n entspricht der Anzahl der Schadstoffwerte des Schadstoffvektors $y_{t-3}^d$.

Die erste Verarbeitungseinheit 22 ermittelt jeweils die Differenz zwischen dem gemessenen Schadstoffwert des Schadstoffes des Schadstoffvektors $y_{t-3}^d$ und dem Wert der dem Schadstoff zugeordneten Observablen des Zustandsvektors. Für jeden Schadstoff weist der Zustandsvektor eine Observable auf. Die Differenzen zwischen jedem gemessenen Schadstoffwert jedes Schadstoffes des Schadstoffvektors $y_{t-3}^d$ und dem Wert der dem Schadstoff zugeordneten Observablen des Zustandsvektors zum Zeitpunkt $t - 3$ werden als erster Fehlervektor mit negativen Kennzeichen einer dritten Verarbeitungseinheit 23 zugeführt.

Zudem wird zum Zeitpunkt t-3 ein Wettervektor $x_{t-3}^d$ mit wenigstens einem Wetterwert wenigstens eines oder mehrerer verschiedener Wetterdaten, die mithilfe von Sensoren gemessen wurden, über einen zweiten Dateneingang 24 dem neuronalen Netz zugeführt. Der Wettervektor $x_{t-3}^d$ des zweiten Dateneinganges 24 wird einer zweiten Verarbeitungseinheit 25 mit negativen Vorzeichen zugeführt. Zudem wird der zweiten Verarbeitungseinheit 25 eine entsprechende Anzahl von m letzten Observablen des Zustandsvektors $s_{t-3}$ mit einem positiven Wert zugeführt. Für jedes Wetterdatum weist der Zustandsvektor eine Observable auf.

Die zweite Verarbeitungseinheit 25 bildet die Differenz für jeden der m Wetterwerte des Wettervektors $x_{t-3}^d$ mit der entsprechenden Observablen des Zustandsvektors $s_{t-3}$. Die Differenzen zwischen den gemessenen Wetterwerten der Wetterdaten des Wetterdatenvektors $x_{t-3}^d$ und den im Zustandsvektor zum Zeitpunkt **t - 3** abgespeicherten Observablen für die Wetterdaten werden als zweiter Fehlervektor der dritten Verarbeitungseinheit 23 zugeführt. Die dritte Verarbeitungseinheit 23 erhält zudem den Zustandsvektor $s_{t-3}$ übermittelt.

Die dritte Verarbeitungseinheit 23 verwendet eine Aktivierungsfunktion, die in diesem Beispiel als Tangens hyperbolicus Funktion **(tan h)** ausgebildet ist und führt folgende Berechnung durch:

$$\tanh\left(s_{t-3} + \begin{bmatrix} -Id \\ 0 \end{bmatrix} \cdot ([Id,0]s_{t-3} - y_{t-3}^d) + \begin{bmatrix} 0 \\ -Id \end{bmatrix} \cdot ([0,Id]s_{t-3} - x_{t-3}^d))$$

$\begin{bmatrix} -Id \\ 0 \end{bmatrix}$ bezeichnet eine diagonale negative Einheitsmatrix, deren Dimension gleich der Dimension der Anzahl der Komponenten des jeweiligen Vektors ist, mit dem die Matrix multipliziert wird. Die ersten n diagonalen Elemente der Matrix weisen den Wert -1 auf. Alle anderen Werte der Matrix haben den Wert 0. $\begin{bmatrix} 0 \\ -Id \end{bmatrix}$ bezeichnet eine diagonale negative Einheitsmatrix, deren Dimension gleich der Dimension der Anzahl der Komponenten des jeweiligen Vektors ist, mit dem die Matrix multipliziert wird. Die letzten n diagonalen Elemente der Matrix weisen den Wert -1 auf. Alle anderen Elemente der Matrix haben den Wert 0.

[*Id*,0] bezeichnet eine diagonale positive Einheitsmatrix, , deren Dimension gleich der Dimension der Anzahl der Komponenten des jeweiligen Vektors ist, mit dem die Matrix multipliziert wird. Die ersten n diagonalen Elemente der Matrix weisen den Wert +1 auf. Alle anderen Werte der Matrix haben den Wert 0.**[0,*Id*]** bezeichnet eine diagonale positive Einheitsmatrix, deren Dimension gleich der Dimension der Anzahl der Komponenten des jeweiligen Vektors ist, mit dem die Matrix multipliziert wird. Die letzten n diagonalen Elemente der Matrix weisen den Wert +1 auf. Alle anderen Elemente der Matrix haben den Wert 0.

Das Ergebnis der dritten Verarbeitungseinheit 23 wird als zeitlich folgender Zustandsvektor $s_{t-2}$ in die Speichereinheit 26 eingeschrieben.

Der Zustandsvektor $s_{t-2}$ zum Zeitpunkt **t - 2** wird nach folgender Formel von der dritten Verarbeitungseinheit 23 ermittelt:

$$s_{t-2} = A \cdot \tanh\left(s_{t-3} + \begin{bmatrix} -Id \\ 0 \end{bmatrix} \cdot ([Id,0]s_{t-3} - y_{t-3}^d) + \begin{bmatrix} 0 \\ -Id \end{bmatrix} \right.$$
$$\left. \cdot ([0,Id]s_{t-3} - x_{t-3}^d)\right)$$

Die dritte Verarbeitungseinheit 23 kann anstelle der Funktion **tan h** auch eine andere Aktivierungsfunktion, insbesondere eine Sigmoidfunktion verwenden.

Die Matrix **A** ist eine zweidimensionale Matrix, die als Elemente Gewichtungsfaktoren aufweist. Die Matrix **A** wird während des Trainings des neuronalen Netzes mit optimierten Gewichtungsfaktoren erstellt.

Der Schadstoffvektor $y_{t-3}^d$ weist wenigstens einen Schadstoffwert eines Schadstoffes, insbesondere mehrere Schadstoffwerte verschiedener Schadstoffe auf, an dem die Schadstoffwerte erfasst wurden. Der tiefgestellte Index t-3 gibt den Zeitpunkt an, für den die Schadstoffwerte ermittelt wurden. Der Schadstoffvektor $y_{t-3}^d$ kann z.B. folgende Schadstoffwerte aufweisen: $y_{t-3}^d$ = (Stickstoffoxidkonzentration, Schwefeldioxidkonzentration, Ammoniakkonzentration, flüchtige organische Verbindungen ohne Methan, Kohlenmonoxidkonzentration, Kohlendioxidkonzentration, Feinstaubkonzentration P10, Feinstaubkonzentration P2,5)

Der Wettervektor $x^d_{t-3}$ weist wenigstens einen Wetterwert für ein Wetterdatum, insbesondere mehrere Wetterwerte verschiedener Wetterdaten auf. Der Index t-3 gibt den Zeitpunkt an, für den die Wetterdaten verwendet werden. Zudem kann der Wettervektor eine Vielzahl von Vektordaten und die Uhrzeit, zu der die Wetterdaten erfasst wurden und den Wochentag, zu dem die Wetterdaten erfasst wurden, aufweisen. Beispielsweise kann der Wettervektor folgende Wetterdaten aufweisen: $x^d_{t-3}$ = (Luftdruck, Temperatur, Windgeschwindigkeit, Luftfeuchtigkeit, Windrichtung, Niederschlag, Uhrzeit, Wochentag)

Der Zustandsvektor $s_{t-3}$ weist als Observablen und Nicht-Observablen beispielsweise folgende vorhergesagte bzw. prädizierte Daten auf:

$s_{t-3}$ = (Stickstoffoxidkonzentration, Schwefeldioxidkonzentration, Ammoniakkonzentration, flüchtige organische Verbindungen ohne Methan, Kohlenmonoxidkonzentration, Kohlendioxidkonzentration, Feinstaubkonzentration PM10, Feinstaubkonzentration PM2,5, , erste Nicht-Observable, zweite Nicht-Observable, ..., n-te Nicht-Observable, Luftdruck, Temperatur, Windgeschwindigkeit, Luftfeuchtigkeit, Windrichtung, Niederschlag, Uhrzeit der Erfassung der Wetterdaten, Tag der Erfassung der Wetterdaten)

Somit weist der Zustandsvektor an einer ersten festgelegten Anzahl von n Positionen die vom neuronalen Netz vorhergesagten Schadstoffwerte der Schadstoffe auf. An einer festgelegten Anzahl von letzten m Positionen weist der Zustandsvektor die vorhergesagten Wetterwerte der Wetterdaten auf. Somit werden in einem Zustandsvektor die messbaren Schadstoffwerte, die messbaren Wetterwerte und die versteckten, nicht messbaren Nicht-Observablen integriert.

Die erste Verarbeitungseinheit 22 verwendet die ersten n Observablen des Zustandsvektors $s_{t-3}$, deren Anzahl gleich der Anzahl der Schadstoffwerte der Schadstoffe des Schadstoffvektors $y^d_{t-3}$ ist und ermittelt für jede Position eine Differenz zwischen der Observablen und dem Schadstoffwert und gibt den Differenzvektor als Fehlervektor mit dem negativen Vorzeichen an die dritte Verarbeitungseinheit 23 weiter.

Der Fehlervektor für die Schadstoffwerte kann folgendermaßen beschrieben werden:

$$\left([Id, 0]s_{t-3} \; - \; y^d_{t-3}\right)$$

In analoger Weise verwendet die zweite Verarbeitungseinheit 25 die letzten m Observablen des Zustandsvektors $s_{t-3}$ und ermittelt für jede Observable die Differenz zu dem jeweiligen Wetterwert des Wertvektors $x^d_{t-3}$. Das Ergebnis wird als Fehlervektor an die dritte Verarbeitungseinheit 23 weitergegeben.

Der Fehlervektor für die Wetterdaten kann folgendermaßen beschrieben werden:

$$\left([0, Id]s_{t-3} \; - \; x^d_{t-3}\right)$$

Diese Rechnung wird für die folgenden Zeitpunkte *t* - **2**, *t* - **1** und *t* wiederholt. Dabei werden jeweils zu den Zeitpunkten *t* - **2**, *t* - **1** und *t* die gemessenen Schadstoffvektoren und die gemessenen Wettervektoren über den ersten Dateneingang 21 beziehungsweise den zweiten Dateneingang 24 dem neuronalen Netz zugeführt und entsprechend dem beschriebenen Verfahren verarbeitet.

Weiterhin werden für zukünftige Zeitpunkte *t* + **1**, *t* + **2** usw. die Berechnungen der zweiten Verarbeitungseinheit 25 und der dritten Verarbeitungseinheit 23 entsprechend dem beschriebenen Verfahren durchgeführt. Für die zukünftigen Zeitpunkte t+1 usw, werden jedoch keine Fehlervektoren mehr unter Berücksichtigung des Schadstoffvektors ermittelt. Sondern es werden die prognostizierten Schadstoffvektoren ausgegeben.

Die Zustandsvektoren für die zukünftigen Zeitpunkte ab dem Zeitpunkt t+2 werden nach folgender Formel berechnet:

$$s_{t+2} = A \cdot \tanh\left(s_{t+1} + \begin{bmatrix} 0 \\ -Id \end{bmatrix} \cdot \left([0, Id]s_{t+1} \; - \; x^d_{t+1}\right)\right)$$

Zudem werden für die zukünftigen Zeitpunkte *t* + **1**, *t* + **2** usw. nicht die gemessenen Wetterdaten, sondern es werden prognostizierte Wetterdaten, d.h. für die Zukunft geschätzte Wetterdaten über die zweiten Dateneingänge 24 eingelesen. Die für die Zukunft für den festgelegten Ortsbereich geschätzten Wetterdaten werden beispielsweise von einem zentralen Computer geliefert.

Für die Zeitpunkte $t + 1$ usw. werden die ersten n Observablen des Zustandsvektors $s_{t+1}$, $s_{t+2}$ als für die Zeitpunkte t+1 usw. vorhergesagte Schadstoffwerte ausgegeben.

Der zum Zeitpunkt $t + 1$ vom Computer ermittelte geschätzte Schadstoffvektor weist gemäß dem folgenden Beispiel Schadstoffwerte für folgende Schadstoffe auf:

$y_{t+1}$ = (Stickoxidkonzentration, Schwefeldioxidkonzentration, Ammoniakkonzentration, flüchtige organische Verbindungen ohne Methan, Kohlenmonoxidkonzentration, Kohlendioxidkonzentration, Feinstaubkonzentration P10, Feinstaubkonzentration P2,5)

Versuche haben gezeigt, dass gute Ergebnisse mit einem Zustandsvektor erreicht werden, der insgesamt eine Anzahl von etwa 50 Nicht-Observablen aufweist. Abhängig von der gewählten Ausführungsform können auch mehr oder weniger Nicht-Observable verwendet werden. Je mehr Nicht-Observable verwendet werden, umso größer ist die Matrix $A$ und umso aufwendiger ist das Training des neuronalen Netzes.

Das neuronale Netz wird z.B. mit bekannten Trainingsverfahren wie beispielsweise Backpropagation trainiert, wobei die vom neuronalen Netz für den zukünftigen Zeitraum vorhergesagten Schadstoffwerte bzw. Schadstoffvektoren mit den tatsächlich auftretenden und gemessenen Schadstoffwerten bzw. Schadstoffvektoren verglichen werden. Dabei werden die Gewichtsfaktoren der Matrix $A$ so lange optimiert, bis das neuronale Netz die Schadstoffwerte bzw. Schadstoffvektoren möglichst genau gemäß den gemessenen Schadstoffwerten für die Zukunft ermittelt.

Wie bereits ausgeführt, können z.B. bis zu 288 Berechnungsschritte der Vergangenheit und bis zu 144 Berechnungsschritte in der Zukunft mithilfe des neuronalen Netzes berechnet werden. Die Berechnungsschritte können beispielsweise jeweils für Zeitpunkte ausgeführt werden, die einen zeitlichen Abstand von jeweils einer Stunde aufweisen.

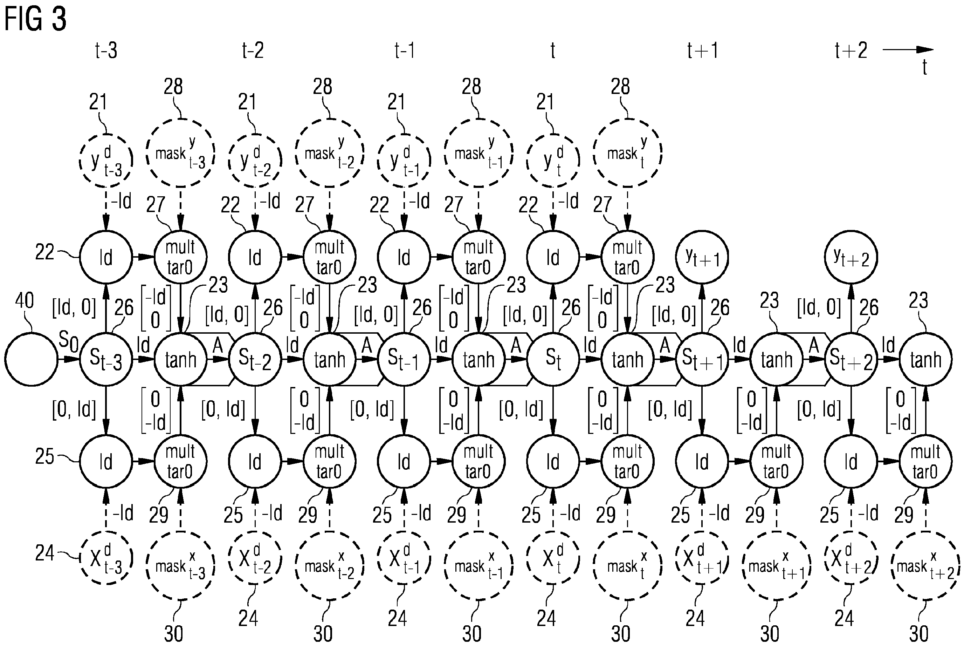

FIG 3 zeigt eine weitere Ausführungsform eines neuronalen Netzes, das in Form von Hardware und/oder Software in einem Computer realisiert ist. Dabei weist das neuronale Netz im Wesentlichen die gleiche Struktur wie in FIG 2 auf. Jedoch ist der Ausgang der ersten Verarbeitungseinheit 22 nicht direkt mit der dritten Verarbeitungseinheit 23 verbunden ist, sondern steht mit einer vierten Verarbeitungseinheit 27 in Verbindung. Dabei führt die erste Verarbeitungseinheit 22 eine Vektorsubtraktion durch, wobei die ersten n Observablen des Zustandsvektors $s_{t-3}$ mit den negativen Werten der n Komponenten des Schadstoffvektors $y_{t-3}^d$ addiert werden. Das Ergebnis wird an die vierte Verarbeitungseinheit 27 weiter gegeben.

Zudem wird über einen Eingang 28 ein Maskierungsvektor $mask_t^y$ zugeführt, der die Informationen enthält, welche der gemessenen Schadstoffwerte des Schadstoffvektors $y_{t-3}^d$ korrekt sind, und welche Schadstoffwerte fehlerhaft sind oder fehlen. Der Maskierungsvektor kann z.B. von dem Computer oder dem zentralen Computer erstellt werden, der die Signale der Sensoren überwacht oder die Werte der Sensoren mithilfe festgelegter Verfahren überprüft und verifiziert.

Der Maskierungsvektor $mask_t^y$ enthält für die Schadstoffwerte, die gemessen wurden, den Wert 1, und für die Schadstoffwerte, die nicht gemessen wurden oder die fehlerhaft sind, den Wert 0 an der entsprechenden Position des Maskierungsvektors auf.

Die vierte Verarbeitungseinheit 27 führt eine Vektormultiplikation mit dem Fehlervektor, der von der ersten Verarbeitungseinheit 22 ausgegeben wird, und dem Maskierungsvektor durch. Das Ergebnis der Vektormultiplikation wird als Fehlervektor mit negativen Kennzeichen an die dritte Verarbeitungseinheit 23 weiter gegeben.

In analoger Weise werden die gemessenen Wettervektoren $x_{t-3}^d$ verarbeitet. Dabei führt die zweite Verarbeitungseinheit 25 eine Vektorsubtraktion durch, wobei die letzten m Observablen des Zustandsvektors $s_{t-3}$ mit den negativen Werten der m Komponenten des Wettervektors $x_{t-3}^d$ addiert werden und das Ergebnis an die fünfte Verarbeitungseinheit 29 weiter gegeben wird. Die fünfte Verarbeitungseinheit 29 erhält über einen weiteren Eingang 30 einen weiteren Maskierungsvektor $mask_t^x$, der angibt, welche der Wetterdaten des Wettervektors korrekt sind, und welche fehlerhaft sind oder nicht gemessen werden konnten. Für fehlerhafte und nicht gemessene Wetterdaten enthält der weitere Maskierungsvektor $mask_t^x$ die Werte 0 und für gemessene Wetterdaten erhält der weitere Maskierungsvektor den Wert 1.

Die fünfte Verarbeitungseinheit 29 führt eine Vektormultiplikation mit dem weiteren Maskierungsvektor des weiteren Eingangs 30 und dem Fehlervektor durch, der von der zweiten Verarbeitungseinheit 25 übermittelt wurde. Das Ergebnis wird mit einem negativen Vorzeichen als Fehlervektor an die dritte Verarbeitungseinheit 23 übermittelt.

Die dritte Verarbeitungseinheit 23 führt mit der Matrix A folgende Berechnung durch:

$$s_{t+1} = A \cdot \tan h \left( s_t + \begin{bmatrix} -Id \\ 0 \end{bmatrix} \cdot \left( mask_t^y \odot \left( [Id, 0] s_t - y_t^d \right) \right) + \begin{bmatrix} 0 \\ -Id \end{bmatrix} \cdot \left( mask_t^x \odot \left( [0, Id] s_t - x_t^d \right) \right) \right)$$

Mithilfe dieser Ausführungsform des neuronalen Netzes können auf einfache Weise fehlerhafte oder nicht zur Verfügung stehende Schadstoffdaten des Schadstoffvektors und Wetterdaten des Wettervektors ausgeblendet werden. Dazu werden die Maskierungsvektoren $mask_t^x$, $mask_t^y$ verwendet. Der tiefgestellte Index gibt den Zeitpunkt für die Berechnung an. Der Index **y** gibt an, dass es sich um den Maskierungsvektor für den Schadstoffvektor handelt. Der Index **x** gibt an, dass es sich um den weiteren Maskierungsvektor für den Wettervektor handelt.

Diese Berechnungsverfahren werden sukzessive für die verschiedenen Zeitpunkte **t - n** bis **t** durchgeführt. Für die zukünftigen Zeitpunkte **t + 1** bis **t + n** werden, wie anhand des neuronalen Netzes der FIG 2 erläutert wurde, nur die prognostizierten Wettervektoren $x_{t+1}^d$, . . . , $x_{t+n}^d$ zur Berechnung verwendet. In analoger Weise sind auch für die zukünftigen Zeitpunkte weitere Maskierungsvektoren zum Ausblenden der nicht gemessenen beziehungsweise der fehlerhaften prognostizierten Wetterdaten der Wettervektoren vorgesehen.

Ab dem Zeitpunkt t+2 führt die die dritte Verarbeitungseinheit 23 mit der Matrix A folgende Berechnung durch:

$$s_{t+2} = A \cdot \tan h \left( s_{t+1} + \begin{bmatrix} 0 \\ -Id \end{bmatrix} \cdot \left( mask_{t+1}^x \odot \left( [0, Id] s_{t+1} - x_{t+1}^d \right) \right) \right)$$

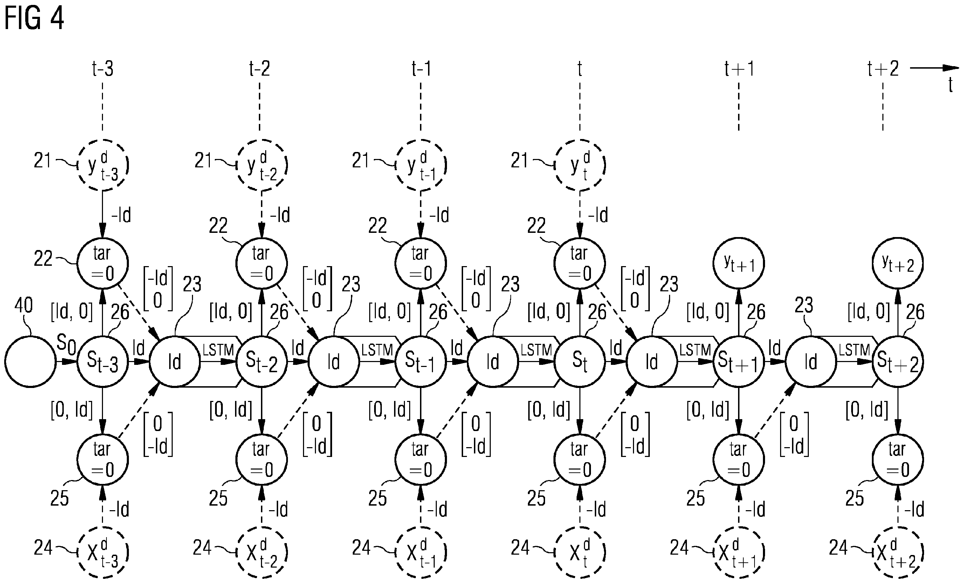

FIG 4 zeigt eine weitere Ausführungsform eines neuronalen Netzes, das eine Grundstruktur gemäß der FIG 2 aufweist. Im Gegensatz zum neuronalen Netz der FIG 2 werden die Fehlervektoren der ersten Verarbeitungseinheit 22 und der zweiten Verarbeitungseinheit 25 bei der dritten Verarbeitungseinheit 23 mit negativen Vorzeichen zu dem zeitlich vorhergehenden Zustandsvektor $s_{t-3}$ addiert. Es wird eine an LSTM angelehnte Speicherfunktion ausgeführt. Die Speicherfunktion ist in einer Form realisiert, die an die LSTM-Speicherfunktion von Sepp Hochreiter, Jürgen Schmidhuber angelehnt ist, wie in "Long short-term memory" in Neural Computation (journal), vol. 9, Issue 8, S. 1735-1780, 1997 beschrieben ist.

Das Ergebnis der Verarbeitung durch die dritte Verarbeitungseinheit 23 ergibt dann den zeitlich folgenden Zustandsvektor $s_{t-2}$, der wieder in der Speichereinheit 26 abgelegt wird. Diese Schritte werden für die aufeinander folgenden Zeitpunkte **t - 3**, **t - 2**, **t - 1** und **t** ausgeführt. Die Berechnungen der Vergangenheit können bis t-n Zeitpunkte zurückgehen.

Zudem werden Berechnungen für die zukünftigen Zeitpunkte **t + 1**, **t + 2** usw. bis **t + n** ausgeführt. Dabei liegen jedoch nur noch die Fehlervektoren der vorhergesagten Wettervektoren vor. Die Fehlervektoren für die Schadstoffvektoren können für die in der Zukunft liegenden Berechnungszeitpunkte t+1 usw. nicht verwendet werden, da für die Zukunft keine gemessenen Schadstoffwerte vorliegen können.

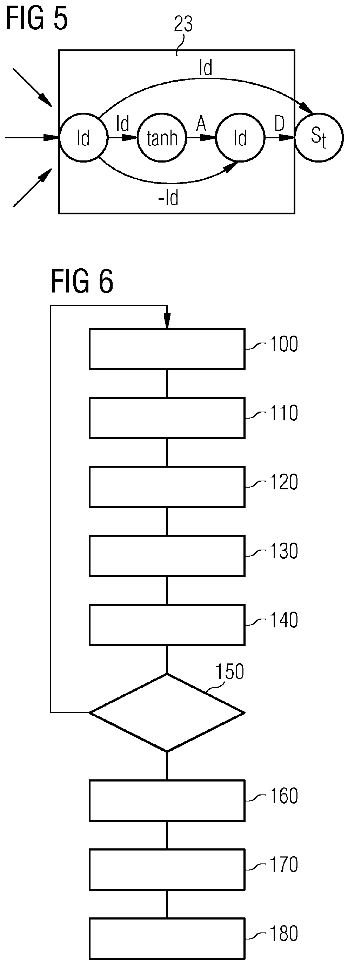

FIG 5 zeigt ein Ausführungsbeispiel für die Funktion der dritten Verarbeitungseinheit 23, bei der eine Speicherfunktion für den Zustandsvektors über den direkt folgenden Berechnungsschritt hinaus erreicht wird. Der dritten Verarbeitungseinheit 23 wird ein korrigierter Zustandsvektor $s_t'$ zugeführt, der den Zustandsvektor $s_t$, den Fehlervektor für die Schadstoffe und den Fehlervektor für die Wetterdaten beinhaltet.

Der korrigierte Zustandsvektor wird nach folgender Formel berechnet:

$$s_t' = A \cdot \tan h \left( s_t + \begin{bmatrix} -Id \\ 0 \end{bmatrix} \cdot \left( [Id, 0] s_t - y_t^d \right) + \begin{bmatrix} 0 \\ -Id \end{bmatrix} \cdot \left( [0, Id] s_t - x_t^d \right) \right)$$

Der korrigierte Zustandsvektor $s_t'$ weist an den ersten n Observablen die vom neuronalen Netz zum Zeitpunkt t geschätzten Observablen minus dem jeweiligen Schadstoffwert des Fehlervektors auf, die von der ersten Verarbeitungseinheit 22 ermittelt wurden. An den letzten m Observablen weist der korrigierte Zustandsvektor die zum Zeitpunkt t geschätzten Observablen minus dem jeweiligen Wetterwert des Fehlervektors der Wetterdaten auf, die von der zweiten Verarbeitungseinheit 25 ermittelt wurden.

Aus dem korrigierten Zustandsvektor $s'_{t-1}$ ermittelt die dritte Verarbeitungseinheit 23 nach folgender Formel den Zustandsvektor für den Zeitpunkt *t*:

$$s_t = (1 - D) \cdot s'_{t-1} + D \cdot A \cdot \tan h\,(s'_{t-1}) = s'_{t-1} + D \cdot (A \cdot \tan h\,(s'_{t-1}) - s'_{t-1})$$

Mit **A** ist die bisher verwendete Matrix bezeichnet. Mit **D** ist eine Diagonalmatrix bezeichnet, die eine wenigstens teilweise Weitergabe des Zustandsvektors zu wenigstens einem zeitlich folgenden Berechnungsschritt im neuronalen Netz bewirkt.

Somit wird auf einfache Weise eine LSTM-Speicherfunktion bewirkt. Die Werte der Elemente der Diagonalmatrix werden, wie die Elemente der Matrix A auch, während des Trainings des neuronalen Netzes erlernt. Die Diagonalmatrix D ist eine quadratische Matrix, bei der alle Elemente außerhalb der Hauptdiagonale den Wert Null aufweisen. Diagonalmatrizen sind deshalb allein durch die Angabe ihrer Hauptdiagonalen bestimmt. Beim Start des Trainings werden für die Elemente, die auf der Hauptdiagonalen der Diagonalmatrix D liegen mit Werten zwischen 0 und 1 belegt. Die Diagonalmatrix **D** kann beispielsweise bis zu 250 oder mehr Elemente, d.h. Gewichtsfaktoren **D**$_{ii}$ auf der Hauptdiagonalen aufweisen.

Der korrigierte Zustandsvektor $s'_t$ wird mit folgender Formel beschrieben:

$$s'_t = \left( s_t + \begin{bmatrix} -Id \\ 0 \end{bmatrix} \cdot \left( [Id, 0]\, s_t - y^d_t \right) + \begin{bmatrix} 0 \\ -Id \end{bmatrix} \cdot \left( [0, Id] s_t - x^d_t \right) \right)$$

Somit ergibt sich der Zustandsvektor $s_{t+1}$ für den Zeitpunkt t+1 nach folgender Formel:

$$s_{t+1} = s'_t + D(A \cdot \tan h\,(s'_t) - s'_t)$$

Mithilfe der beschriebenen Speicherfunktion, die mithilfe der Diagonalmatrix D realisiert wird, werden die Werte des Zustandsvektors wenigstens teilweise bei mehr als einen zeitlich folgenden Berechnungsschritt berücksichtigt. Abhängig von der gewählten Ausführungsform ergibt sich dadurch eine mit der Zeit abnehmende Berücksichtigung der Werte des Zustandsvektors. Versuche haben gezeigt, dass die Speicherfunktion zu einer weiteren Verbesserung der Vorhersage der Schadstoffwerte insbesondere für längere Zeiträume führen kann.

Auch bei den neuronalen Netzen der Figuren 3 bis 5 können andere Aktivierungsfunktionen als die Tangens hyperbolicus Funktion (tanh) verwendet werden.

Abhängig von der gewählten Ausführungsform können auch neuronale Netze verwendet werden, die eine Kombination der neuronalen Netze der Figuren 2 bis 5 darstellen. Insbesondere können die Maskierungsvektoren auch bei dem neuronalen Netz der Figuren 4 und 5 mit der LSTM-Speicherfunktion angewendet werden.

FIG 6 zeigt in einer schematischen Darstellung einen Programmablauf für ein Verfahren zum Steuern eines Verkehrs eines Straßennetzes.

Bei Programmpunkt 100 werden Schadstoffwerte mithilfe von Sensoren erfasst. Die Schadstoffwerte können beispielsweise eine Stickoxidkonzentration, eine Schwefeldioxidkonzentration, eine Ammoniakkonzentration, flüchtige organische Verbindungen ohne Methan, eine Kohlenmonoxidkonzentration, eine Kohlendioxidkonzentration, eine Feinstaubkonzentration PM10 und/oder eine Feinstaubkonzentration PM2,5 darstellen. Zudem werden Wetterdaten mithilfe von Sensoren bei einem folgenden Programmpunkt 110 erfasst. Die Wetterdaten können z.B. Luftdruck, Temperatur, Windgeschwindigkeit, Luftfeuchtigkeit, Windrichtung und/oder Niederschlag sein. Diese Wetterdaten haben einen messbaren Einfluss auf eine Schadstoffkonzentration in der Luft und sind deshalb besonders aussagekräftig, um die Entwicklung eines Schadstoffwertes der Luft vorherzusagen. Es können jedoch auch weitere Wetterdaten erfasst werden. Zudem werden die Uhrzeit und der Wochentag der Messungen und der festgelegte Ortsbereich, für den die Messungen gelten, erfasst.

Bei einem folgenden Programmpunkt 120 werden für einen zukünftigen Zeitraum Wetterdaten prognostiziert. Die zukünftigen Wetterdaten können folgende Parameter umfassen: Luftdruck, Temperatur, Windgeschwindigkeit, Luftfeuchtigkeit, Windrichtung und/oder Niederschlag. Die zukünftige Vorhersage der Wetterdaten kann einen zukünftigen Zeitraum von Minuten, Stunden oder auch Tagen, insbesondere bis zu 5 Tagen oder mehr umfassen.

Bei einem folgenden Programmpunkt 130 werden die gemessenen Schadstoffwerte, die gemessenen Wetterdaten und die prognostizierten zukünftigen Wetterdaten an einen Computer übertragen. Die für die Zukunft vorhergesagten Wetterdaten können beispielsweise auch von einem zentralen Wetterdienst, an den Computer übermittelt werden.

Bei einem Programmpunkt 140 verwendet der Computer eine Software- und/oder Hardware-Struktur, um eines der in den Figuren 2 bis 5 beschriebenen neuronalen Netze auszuführen.

Es wird davon ausgegangen, dass zu diesem Zeitpunkt bereits das neuronale Netze entsprechend trainiert wurde, sodass die Gewichtungsfaktoren der Matrix *A* und je nach Netz auch die die Gewichtungsfaktoren der Diagonalmatrix *D* bereits für das vorliegende System mit den vorherzusagenden Schadstoffwerten und den gemessenen Wetterdaten und den vorhergesagten Wetterdaten optimiert wurden.

Zudem erhält der Computer beispielsweise von den Sensoren die Information, welche der übermittelten Schadstoffwerte und/oder Wetterdaten fehlen beziehungsweise defekt sind, um die Maskierungsvektoren für das neuronale Netz gemäß der Ausführungsform der FIG 3 bilden zu können. Weiterhin kann der Computer beispielsweise mithilfe von Plausibilitätsprüfungen überprüfen, ob die von den Sensoren gelieferten Werte für die gemessenen Wetterdaten und/oder Schadstoffwerte oder die zukünftigen geschätzten Wetterdaten defekt sind. Fehlen die Werte der Sensoren, so erkennt der Computer ein Fehlen der Sensordaten. Bei fehlenden Sensordaten werden an den entsprechenden Stellen des Maskierungsvektors die Werte 0 gesetzt.

Folglich werden dann bei einer Vektormultiplikation in der vierten Verarbeitungseinheit 27 die entsprechenden Korrekturwerte, die von der ersten Verarbeitungseinheit geliefert werden auf den Wert 0 gesetzt und damit für die weitere Berechnung nicht verwendet, d.h. ausgeblendet.

Liegen korrekte Sensordaten vor, so sind an den entsprechenden Stellen des Maskierungsvektors jeweils der Wert 1 abgelegt. Folglich werden dann bei einer Vektormultiplikation in der vierten Verarbeitungseinheit 27 die entsprechenden Korrekturwerte, die von der ersten Verarbeitungseinheit geliefert werden, mit dem Wert 1 multipliziert und damit für die weitere Berechnung verwendet und an die dritte Bearbeitungseinheit 23 weiter geleitet.

Anschließend wird zu Programmpunkt 150 verzweigt, bei dem die Abfrage erfolgt, ob eine festgelegte Mindestanzahl von Berechnungen in der Vergangenheit mit dem neuronalen Netz durchgeführt wurde. Ist dies nicht der Fall, so wird zu Programmpunkt 100 zurückverzweigt und es werden weitere Messungen und Berechnungen durchgeführt.

Beispielsweise kann die Anzahl der Berechnungen in die Vergangenheit über einen Zeitraum von mehreren Stunden oder mehreren Tagen festgelegt sein. Zudem können Berechnungen typischerweise für jede Stunde durchgeführt werden. Für die Berechnungen der neuronalen Netze können die Schadstoffwerte und/oder Wetterdaten jeweils gemittelt über eine Stunde verwendet werden.

Ergibt die Abfrage bei Programmpunkt 150, dass über den festgelegten vergangenen Zeitraum Berechnungen mit dem neuronalen Netz durchgeführt wurden, dann wird zu Programmpunkt 160 verzweigt.

Bei Programmpunkt 160 ermittelt der Computer für einen festgelegten zukünftigen Zeitraum mithilfe eines der beschriebenen neuronalen Netze wenigstens einen Schadstoffwert, insbesondere mehrere Schadstoffwerte. Der zukünftige Zeitraum kann dabei bis zu Stunden, Tage oder auch mehr als fünf Tage betragen. Dabei können die Schadstoffwerte für jede Stunde über den festgelegten zukünftigen Zeitraum von beispielsweise 5 Tagen ermittelt werden.

Als Schadstoffwerte können beispielsweise die Stickoxidkonzentration, die Schwefeldioxidkonzentration, die Ammoniakkonzentration, flüchtige organische Verbindungen ohne Methan, Feinstaubkonzentration PM10, die Kohlenmonoxidkonzentration, die Kohlendioxidkonzentration und/oder die Feinstaubkonzentration PM2,5 berechnet werden. Die für den zukünftigen Zeitraum vorhergesagten Schadstoffwerte können bei einem folgenden Programmpunkt 170 ausgegeben werden.

Zusätzlich oder anstelle der Ausgabe kann bei Programmpunkt 170 ein Vergleich der Schadstoffwerte mit vorgegebenen Grenzwerten durchgeführt werden. Ergibt der Vergleich, dass wenigstens einer der Schadstoffwerte den für den Schadstoffwert vorgegebenen Grenzwert in dem zukünftigen Zeitraum überschreitet, so kann ein Steuerbefehl vom Computer bei einem folgenden Programmpunkt 180 generiert und ausgegeben werden. Die Grenzwerte können in einem Datenspeicher des Computers abgelegt sein.

Der Steuerbefehl kann beispielsweise eine Information an Signalanlagen sein, den Verkehr umzulenken, um beispielsweise in einem festgelegten Ortsbereich eine zukünftige Überschreitung eines Grenzwertes für einen Schadstoffwert zu verhindern. Zudem können die Steuerwerte auch direkt an Fahrzeuge übermittelt werden, sodass die Fahrzeuge einen vorgegebenen Ortsbereich meiden, um eine vorhergesagte Überschreitung eines Grenzwertes eines Schadstoffwertes zu verhindern. Regeln und Vorschriften zum Ableiten der Steuerbefehle abhängig von den Grenzwerten sind ebenfalls in einem Datenspeicher des Computers abgelegt.

Somit stellt der Computer eine Steuereinheit dar, die ausgebildet ist, um Steuerbefehle für die Steuerung eines Straßenverkehrs auszugeben. Dazu werden die vom neuronalen Netz für die Zukunft vorhergesagten Schadstoffwerte mit vorgegebenen Grenzwerten für die Schadstoffwerte verglichen und abhängig von festgelegten Regeln entsprechende Steuerbefehle erzeugt. Die Regeln und die Grenzwerte sind in einem Datenspeicher des Computers abgelegt. Die Steuerbefehle können direkt an Signalanlagen, das heißt an Ampeln, übermittelt werden, um den Verkehr in der Weise zu steuern, dass die Schadstoffwerte für einen vorgegebenen Ortsbereich reduziert werden. Somit kann die Steuereinheit ausgebildet sein, direkt Signalanlagen zur Steuerung des Straßenverkehrs zu steuern.

Zudem können die Steuerbefehle auch direkt an die Fahrzeuge übermittelt werden, mit der Information, dass vorgegebene Ortsbereiche beispielsweise vollständig gesperrt sind oder nur mit reduzierter Geschwindigkeit oder nur von festgelegten Fahrzeugtypen, wie beispielsweise Elektrofahrzeugen, befahren werden dürfen. Zudem können beispielsweise Dieselfahrzeuge oder Lkws als separate Gruppe von Fahrzeugen für das Befahren eines vorgegebenen Ortsbereiches gesperrt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Computerimplementiertes Verfahren zur Vorhersage von wenigstens einem Schadstoffwert der Luft für einen zukünftigen Zeitraum, wobei ein neuronales Netz wenigstens ein gemessenes Wetterdatum für einen festgelegten vergangenen Zeitraum, wenigstens einen gemessenen Schadstoffwert der Luft für den vergangenen Zeitraum und wenigstens ein vorhergesagtes Wetterdatum für den zukünftigen Zeitraum verwendet, um für den zukünftigen Zeitraum wenigstens einen Schadstoffwert der Luft vorherzusagen.

2. Verfahren nach Anspruch 1, wobei als gemessenes Wetterdatum wenigstens einer der folgenden Parameter verwendet wird: Luftdruck, Temperatur, Windgeschwindigkeit, Luftfeuchtigkeit, Windrichtung und Niederschlag.

3. Verfahren nach einem der vorhergehenden Ansprüche, wobei als vorhergesagtes Wetterdatum wenigstens einer der folgenden Parameter verwendet wird: Luftdruck, Temperatur, Windgeschwindigkeit, Luftfeuchtigkeit, Windrichtung und Niederschlag.

4. Verfahren nach einem der vorhergehenden Ansprüche, wobei zusätzlich zu den gemessenen Wetterdaten und/oder den gemessenen Schadstoffwerten die Uhrzeiten und/oder Wochentage, zu denen die Wetterdaten und/oder die Schadstoffwerte gemessen wurden, vom neuronalen Netz berücksichtigt werden.

5. Verfahren nach einem der vorhergehenden Ansprüche, wobei als Schadstoffwerte eine Stickoxidkonzentration, eine Schwefeldioxidkonzentration, eine Ammoniakkonzentration, flüchtige organische Verbindungen ohne Methan, eine Kohlenmonoxidkonzentration, eine Kohlendioxidkonzentration und/oder eine Feinstaubkonzentration verwendet werden.

6. Verfahren nach einem der vorhergehenden Ansprüche, wobei vom neuronalen Netz bei der Vorhersage des Schadstoffwertes eine Abweichung zwischen den gemessenen Wetterdaten und vom neuronalen Netz ermittelten Wetterdaten während des vergangenen Zeitraums berücksichtigt, und/oder wobei das neuronale Netz bei der Vorhersage des Schadstoffwertes eine Abweichung zwischen den vorhergesagten Wetterdaten und vom neuronalen Netz ermittelten Wetterdaten während des zukünftigen Zeitraumes berücksichtigt werden.

7. Verfahren nach einem der vorhergehenden Ansprüche, wobei vom neuronalen Netz bei der Vorhersage des Schadstoffwertes für den zukünftigen Zeitraum eine Abweichung zwischen den gemessenen Schadstoffwerten und vom neuronalen Netz ermittelten Schadstoffwerten für den vergangenen Zeitraum berücksichtigt wird.

8. Verfahren nach Anspruch 6 und 7, wobei vom neuronalen Netz die Abweichung zwischen den Wetterdaten, die vom neuronalen Netz ermittelt werden, und den gemessenen Wetterdaten und die Abweichung zwischen vom neuronalen Netz ermittelten Schadstoffwert und dem gemessenen Schadstoffwert berücksichtigt werden, um einen Schadstoffwert und/oder ein Wetterdatum für einen zukünftigen Zeitpunkt vorherzusagen.

9. Verfahren nach einem der vorhergehenden Ansprüche, wobei bei einem Ausfall von zu messenden Wetterdaten und/oder bei einem Ausfall von zu messenden Schadstoffwerten und/oder bei einem Ausfall von vorherzusagenden Wetterdaten vom neuronalen Netz anstelle der zu messenden Wetterdaten und/oder anstelle der zu messenden Schadstoffwerte und/oder anstelle der vorhergesagten Wetterdaten vom neuronalen Netz selbst vorhergesagte Wetterdaten und/oder vorhergesagte Schadstoffwerte verwendet werden.

10. Verfahren nach einem der vorhergehenden Ansprüche, wobei vom neuronalen Netz wenigstens ein Teil des Zustandsvektors wenigstens teilweise bei wenigstens einem folgenden Berechnungsschritt berücksichtigt wird.

11. Verfahren nach Anspruch 10, wobei vom neuronalen Netz die Observablen und die Nicht-Observablen des Zustandsvektors wenigstens teilweise bei einem folgenden Berechnungsschritt berücksichtigt werden.

12. Verfahren nach einem der vorhergehenden Ansprüche, wobei abhängig von dem vorhergesagten Schadstoffwert ein Steuersignal zur Beeinflussung eines Verkehrsflusses erzeugt und ausgegeben wird, um eine zukünftige Erhöhung des Schadstoffwertes in dem Ortsbereich wenigstens zu verlangsamen.

13. Verfahren zum Trainieren eines neuronalen Netzes zur Vorhersage wenigstens eines Schadstoffwertes in der Luft für einen zukünftigen Zeitraum, wobei das neuronale Netz mit gemessenen Wetterdaten für einen Ortsbereich für einen vergangenen Zeitraum, mit gemessenen Schadstoffwerten der Luft für den Ortsbereich für den vergangenen Zeitraum und mit vorhergesagten Wetterdaten für den Ortsbereich und für den zukünftigen Zeitraum trainiert wird.

14. Computer, der ausgebildet ist, um ein Verfahren nach einem der vorhergehenden Ansprüche auszuführen.

15. Computerprogrammprodukt, umfassend Befehle, die bei der Ausführung des Programms durch einen Computer diesen veranlassen, ein Verfahren nach einem der Ansprüche 1 bis 13 auszuführen.

16. Steuereinheit, die ausgebildet ist, um Steuerbefehle für die Steuerung eines Straßenverkehrs auszugeben, wobei die Steuereinheit ein neuronales Netz aufweist, wobei das neuronale Netz ausgebildet ist, um wenigstens einen Schadstoffwert in der Luft für einen festgelegten zukünftigen Zeitraum vorherzusagen, wobei das neuronale Netz einen Dateneingang für wenigstens ein gemessenes Wetterdatum, für wenigstens einen gemessenen Schadstoffwert der Luft und für wenigstens ein zukünftiges vorhergesagtes Wetterdatum aufweist, und wobei das neuronale Netz Datenausgänge für wenigstens ein für einen zukünftigen Zeitraum zu ermittelnden Schadstoffwert und für wenigstens ein für den zukünftigen Zeitraum zu ermittelndes Wetterdatum aufweist, und wobei die Steuereinheit ausgebildet ist, um abhängig vom ermittelten Schadstoffwert einen Steuerbefehl für die Steuerung des Straßenverkehrs zu ermitteln und auszugeben, um eine weitere Erhöhung des Schadstoffwertes wenigstens zu verlangsamen.

# FIG 1

FIG 2

# FIG 3

EP 3 751 466 A1

# FIG 4

EP 3 751 466 A1

## FIG 5

23

Id

Id → Id → tanh → A → Id → D → S_t

-Id

## FIG 6

100

110

120

130

140

150

160

170

180

**Europäisches Patentamt**
**European Patent Office**
**Office européen des brevets**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG XIN ET AL: "A hybrid model for short-term air pollutant concentration forecasting", 2015 IEEE INTERNATIONAL CONFERENCE ON SERVICE OPERATIONS AND LOGISTICS, AND INFORMATICS (SOLI), IEEE, 15. November 2015 (2015-11-15), Seiten 171-175, XP032839252, DOI: 10.1109/SOLI.2015.7367614 [gefunden am 2015-12-28] | 1-5,9, 12-16 | INV. G06N3/02 G06Q10/04 G06Q50/26 |
| Y | * Zusammenfassung; "IV. EXPERIMENTS AND RESULTS", "A. Experiment discription"; "IV. EXPERIMENTS AND RESULTS", "B. Experiment enivriment" * | 6-8,10, 11 | |
| A | DIVYAM MADAAN ET AL: "VayuAnukulani: Adaptive Memory Networks for Air Pollution Forecasting", ARXIV.ORG, CORNELL UNIVERSITY LIBRARY, 201 OLIN LIBRARY CORNELL UNIVERSITY ITHACA, NY 14853, 8. April 2019 (2019-04-08), XP081166402, * "I. INTRODUCTION" * | 1-16 | |
| Y | US 2013/204815 A1 (GROTHMANN RALPH [DE] ET AL) 8. August 2013 (2013-08-08) | 6-8,10, 11 | RECHERCHIERTE SACHGEBIETE (IPC) G06N G06Q |
| A | * Absätze [0036] - [0039]; Abbildung 6 * | 1-5,9, 12-16 | |

-/--

Der vorliegende Recherchenbericht wurde für alle Patentansprüche erstellt

| Recherchenort | Abschlußdatum der Recherche | Prüfer |
|---|---|---|
| München | 26. Mai 2020 | Reinbold, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 19 18 0027

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ZIMMERMANN HANS-GEORG ET AL: "Forecasting with Recurrent Neural Networks: 12 Tricks", 2012, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 687 - 707, XP047388474, ISBN: 978-3-642-17318-9 | 6-8,10, 11 | |
| A | * "Trick 7. Architectural Teacher Forcing (ATF) for HCNNs" *  ----- | 1-5,9, 12-16 | |
| A | Anonymous: "Is it possible to train a neural network with missing data?", , 22. Januar 2014 (2014-01-22), XP055698002, Gefunden im Internet: URL:https://www.researchgate.net/post/Is_it_possible_to_train_a_neural_network_with_missing_data2 [gefunden am 2020-05-25] * Seite 1 - Seite 2 *  ----- | 1-16 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 26. Mai 2020 | Reinbold, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 0027

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2020

| Im Recherchenbericht angeführtes Patentdokument | Datum der Veröffentlichung | Mitglied(er) der Patentfamilie | Datum der Veröffentlichung |
|---|---|---|---|
| US 2013204815 A1 | 08-08-2013 | CN 102934131 A<br>EP 2543006 A1<br>US 2013204815 A1<br>WO 2011128313 A1 | 13-02-2013<br>09-01-2013<br>08-08-2013<br>20-10-2011 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Long short-term memory. *Neural Computation (journal),* 1997, vol. 9 (8), 1735-1780